# EUROPÄISCHE PATENTANMELDUNG

(11) **EP 3 180 986 A1**
(43) Veröffentlichungstag der Anmeldung: **21.06.2017**
(21) Anmeldenummer: 16187156.1
(22) Anmeldetag: 04.09.2016
(51) Int. Cl.: A21D 13/066, A21D 10/00, A21D 2/26, A21D 13/068, A21D 13/062

(54) **MISCHUNG ZUR HERSTELLUNG FETTARMER, KOHLENHYDRATARMER UND GLUTENFREIER BACKWAREN SOWIE BACKFERTIGE MISCHUNG UND VERWENDUNG DER MISCHUNG**

(30) Priorität: 04.09.2015 DE 102015114898
(71) Anmelder: Next Peak UG (haftungsbeschränkt), 01277 Dresden (DE)
(72) Erfinder: Reif, André, 01277 Dresden (DE)
(74) Vertreter: Weissfloh, Ingo

(57) **Zusammenfassung**

Aufgabe der Erfindung ist es, eine Mischung zur Herstellung fettarmer und kohlenhydratarmer Backwaren zu schaffen, wobei eine einfache Backmischung zum Einsatz kommt, bei welcher für einen niedrigen Kalorienanteil der Anteil an Fetten, zu denen auch die Öle gehören und der Anteil an Kohlenhydraten auf ein Mindestmaß und zudem den Anteil von Gluten reduziert bzw. als glutenfrei eingestuft werden kann.

Das Anwendungsgebiet der Erfindung liegt in der Herstellung von Backwaren.

## Beschreibung

Bekannt sind Backwaren, welche neben einem hohen Anteil an Kohlenhydraten auch einen hohen Anteil an Fetten besitzen. So sind beispielsweise feine Backwaren dadurch gekennzeichnet, dass ihr Gehalt an Fett bzw. Zuckerarten mehr als 10 Teile auf 90 Teile Getreide, Getreideerzeugnisse bzw. Stärken beträgt. Somit sind definitionsgemäß überwiegend Fette und Kohlenhydrate und nur geringe Anteile an Proteinen enthalten. Die eintretende Sättigung beim Verzehr dieser Lebensmittel ist dabei von kurzer Dauer. Damit ist ein unbeschwerter Genuss von feinen Backwaren bei einer bewussten Lebensweise kaum bis überhaupt nicht möglich.

Die mit dem Verzehr von Kohlehydraten und von Fetten enthaltene Backwaren im weitesten Sinne einhergehende Sättigung hält im Vergleich zu einer proteinreichen Ernährung vergleichsweise nur kurz an.

Zudem enthalten die üblicherweise eingesetzten Mehle neben Kohlenhydraten große Mengen an Klebern, auch Gluten genannt, welche für eine hohe Unverträglichkeit bekannt sind und zu einer Durchlässigkeit der Darmwände führen.

So werden in der EP 0 011 174 B2 hocheiweißreiche Backwaren, welche neben verschiedenen Proteinen und Ballaststoffen unter anderem einen vergleichsweise hohen Anteil an Weizenkleber enthalten und damit zwar einen an sich hohen Anteil an Proteinen enthalten, aber zudem nicht auf den Kleber verzichten können, welcher zwar auch zu den Proteinen zählt, aber eine nicht zu unterschätzende Unverträglichkeit und eine geringe biologische Wertigkeit (Verwertbarkeit durch den Organismus) besitzt.

Weiterhin beschreibt die DE 20 2011 107 231 U1 eine Backmischung, welche neben einem hohen Anteil an Proteinen, zu welchem auch die Glutene gehören, zusätzlich auch Getreidevollkornmehl und damit Kohlenhydrate enthält. Zudem ist ein hoher Anteil an Fetten enthalten.

Die genannten Backmischungen stellen einfache Versuche zur Bildung einer Backmischung dar, da zwar der Anteil an Kohlehydraten reduziert wurde, dafür aber der Anteil an Fetten bzw. Ölen erhöht wurde, was in der Kalorienbilanz eher zu einer Verschlechterung als zu einer Verbesserung führt. Zudem sind die für Ihre Unverträglichkeit bekannten Getreidekleber und Soja enthalten.

Aufgabe der Erfindung ist es, eine Mischung zur Herstellung fettarmer und kohlenhydratarmer Backwaren zu schaffen, wobei eine einfache Backmischung zum Einsatz kommt, bei welcher für einen niedrigen Kalorienanteil der Anteil an Fetten, zu denen auch die Öle gehören und der Anteil an Kohlenhydraten auf ein Mindestmaß reduziert und zudem auf Gluten verzichtet und damit als glutenfrei eingestuft werden kann.

Mit der Erfindung wird im angegebenen Anwendungsfall erreicht, dass eine Mischung zur Herstellung fettarmer und kohlenhydratarmer Backwaren geschaffen wird, wobei die Mischung einen hohen Anteil
- 10 bis 60 Gew.-% zumindest einer Proteinquelle,
- 5 bis 60 Gew.-% an zumindest einem getreidefreien Mehl,
- 0,1 bis 10 Gew.-% an zumindest einem Verdickungsmittel,
- 0 bis 50 Gew.-% an zumindest einem Füllstoff und
- 0 bis 10 Gew.-% an zumindest einem Zusatzstoff bezogen auf des Gesamtgewicht der Mischung enthält. Hierbei wird erreicht, dass mit dem Einsatz geeigneter Komponenten der Anteil in der Mischung an enthaltenen Fetten unter 6,2 Gew.-% und der Anteil an enthaltenen, vom menschlichen Organismus verwertbaren Kohlenhydraten unter 20 Gew.-% bleibt. Damit reduziert sich der Anteil an Kalorien erheblich, da diese weder durch Fette oder Öle noch durch Kohlhydrate wie durch Getreidemehle in der Mischung enthalten sind. Zudem wird erreicht, da auf Getreidemehle verzichtet wird, so dass auch das Gluten entfällt. Damit wird eine proteinvermehrte und zugleich kalorienarme Ernährung erreicht. Somit ermöglicht diese Mischung eine glutenfreie Ernährung.

Mit der Verwendung der Mischung zur Herstellung von Backwaren wie Brote und Brötchen und zur Herstellung eines Ersatzes für feine Backwaren sowie für Dauerbackwaren eröffnet ein großes Anwendungsfeld für jene, welche kalorienbewusst leben und sich entsprechend ernähren wollen oder gar müssen. Dabei wird auch eine glutenfreie Ernährung ermöglicht, welche einen Verzicht auf bestimmte Backwarenarten nicht erfordert, da mit der Mischung vielfältige Backwarenarten herstellbar sind.

Mit der backfertigen Mischung unter Verwendung der erfindungsgemäßen Mischung, welche mit 1,2 bis 2 Teilen Flüssigkeit ausgehend vom Gewicht der Mischung vermischt ist, ist der Anteil an enthaltenen Fetten 1,6 Gew.-% und der Anteil an enthaltenen, vom menschlichen Organismus verwertbaren Kohlenhydraten 10 Gew.-%. Damit wird eine sehr fettarme und kohlenhydratarme Ernährung erreicht. Der Anteil an Kohlenhydraten erhöht sich bei der Verwendung von Früchten in der Mischung ursprungsbedingt auf 15 Gew.-% an der backfertigen Gesamtmischung. Somit wird eine bewusste Backware geschaffen, welche den Anforderungen an eine fettarme und kohlenhydratarme Ernährung gerecht wird und zudem Glutenunverträglichkeiten ausschließt.

Da die Mischung keine zusätzlichen Aromen und/oder Konservierungsstoffen enthält, werden auch hier Unverträglichkeiten ausgeschlossen. Mit der Mischung wird ein Backergebnis erreicht, welches im Vergleich zu herkömmlichen Backwaren länger frisch und genießbar bleiben, trotz des Verzichtes auf Konservierungsstoffe.

Vorteilhafte Ausgestaltungen der Erfindung sind in den Unteransprüchen dargestellt.

Vorteilhaft sind die Füllstoffe vorzugsweise Ballaststoffe, wie beispielsweise Faserstoffe, Cellulose und/oder Kleie von Getreiden und/oder Pseudogetreiden. Durch die Ballaststoffe lassen sich die energetisch verwertbaren Zutaten reduzieren. Die Mischung lässt sich zudem kostengünstig aufwerten. Zudem ergeben sich Vorteile hinsichtlich des Backergebnisses.

Indem die die Proteinquelle, das getreidefreie Mehl, das Verdickungsmittel und/oder die Füllstoffe die Zusatzstoffe enthalten, lassen sich die Zutaten entsprechend vereinfachend so auswählen und kombinieren, so dass auf kostenintensive und weniger geeignete Einzelrohstoffen verzichtet werden kann. Zudem ist es nicht ausgeschlossen, dass entsprechende Rohstoffe bereits vom Ursprung her das Verdickungsmittel und/oder die Füllstoffe die Zusatzstoffe enthalten.

Indem die Proteinquelle, insbesondere das getreidefreie Mehl, und/oder das Verdickungsmittel Kohlenhydrate als zumindest Einfachzucker enthalten, kann auf die Zugabe von Süßungsmitteln verzichtet werden. Das mit Süßungsmitteln hervorgerufene Geschmacksempfinden wird beim Kauen jedoch auch erzielt. Somit wird die Mischung ohne zusätzliche Süßungsmittel vereinfacht, wobei nicht ausgeschlossen ist, dass je nach Anwendungsfall dennoch Süßungsmittel zum Einsatz kommen können.

Indem das getreidefreie Mehl entölt ist, reduziert sich der Gesamtfettgehalt der Mischung.

Insbesondere sind die Zusatzstoffe beispielsweise Würzmittel, Früchte und/oder an sich bekannte Backtriebmittel, wie beispielsweise Natron, Hirschhornsalz oder Pottasche. So lässt sich neben der physikalischen Lockerung durch den Einsatz des Wassers auch die chemische Lockerung durch die beispielhaft genannten Backtriebmittel einsetzen, um die Backergebnisse entsprechend der Bedürfnisse anzupassen. Mit Würzmittel bzw. Früchten lassen sich entsprechende Anpassungen an den Verwendungszweck sowie Geschmack vornehmen.

Mehrere Ausführungsbeispiele der Erfindung werden im Folgenden näher beschrieben.

Die erfindungsgemäße Mischung zur Herstellung fettarmer und kohlenhydratarmer Backwaren, ist durch einen Gehalt von
- 10 bis 60 Gew.-% zumindest einer Proteinquelle,
- 5 bis 60 Gew.-% an zumindest einem getreidefreien Mehl,
- 0,1 bis 10 Gew.-% an zumindest einem Verdickungsmittel,
- 0 bis 50 Gew.-% an zumindest einem Füllstoff und
- 0 bis 10 Gew.-% an zumindest einem Zusatzstoff bezogen auf des Gesamtgewicht der Mischung in Trockenform (ohne Zugabe von Flüssigkeit) gekennzeichnet. Die jeweilige in den Grenzen der angegebenen Zutaten liegende Mischung besitzt einen Anteil an enthaltenen Fetten von zwischen 1 bis 6,2 Gew.-% und einen Anteil an enthaltenen, vom menschlichen Organismus verwertbaren Kohlenhydraten von zwischen 3 und 10 Gew.-%. Die Summe der jeweiligen Zutaten beträgt 100 %. In der folgenden Tabelle werden beispielhaft zwei Mischungen dargestellt, zudem wird zur Mischung angegeben, welche Eigenschaften eine aus dieser Mischung hergestellte Backware besitzt.

Zum Einsatz kommen beispielsweise Molkeproteine, Mehle getreidefreien/glutenfreie Mehlen (Leinsamen, Süßgräser, Kokosmehl), Guarkernmehl, Flohsamenschalen und/oder Johannesbrotkernmehl als Verdickungsmittel, Faserstoffe als Füllstoff aus beispielsweise Bambussprossen oder Apfel, Natron sowie Salz als Zusatzstoff.

In der folgenden Tabelle sind in den Spalten 2 und 3 verschiedene Mischungen angegeben, wobei die angegebenen Werte jeweils die Gewichtsprozente der jeweiligen Zutat in Trockenform angeben. Zu der Mischung 1 werden 1,875 Teile Wasser und zur Mischung 2 1,5 Teile Wasser hinzugefügt.

| Mischung: | 1 | 2 |
|---|---|---|
| Protein | 33,57 | 39 |
| Leinsamenmehl (gold) | 7,55 | 8 |
| Kokosmehl | 5,04 | 7 |
| Buchweizenmehl | 5,87 | 2 |
| Teffmehl | 15,95 | 10 |
| Verdickung | 8,17 | 10 |
| Füllstoff | 15,11 | 18 |
| Zusatzstoff | 8,74 | 6 |
| | 100 | 100 |

Das Backergebnis nach Mischung 1 zeichnet sich durch eine lockere und brotähnliche bzw. brötchenähnliche feuchte Konsistenz aus, welche aufgrund der optimalen Anteile an Triebmittel eine brotähnliche Porengröße besitzt. Hingegen erhält man nach Mischung 2 Backergebnis, welches eine festere Konsistenz besitzt.

So sind beispielsweise Buchweizen (Knöterichgewächse Polygonaceae) und Zweighirse (Süßgräser /Poaceae) getreide- und glutenfrei.

Die dargestellten Mischungen und die jeweiligen Backergebnisse zeigen, dass die angegebenen Zutaten in jeweils verschiedenen Mischungsverhältnissen in der Lage sind, Backwaren herzustellen, welche Brot oder Brötchen sind. Es lassen sich jedoch auch Backwaren als ein Ersatz für Feine Backwaren oder entsprechend eine Pseudofeinbackware herstellen, wobei einerseits kein Mehl enthalten und andererseits der Anteil von Fett sehr gering ist.

Aufgrund der Fülle an möglichen Mischungen lassen sich diese nicht umfassend darstellen. Dennoch werden je nach Anwendungsfall Mischungen sich im gesamten beanspruchten Bereich der Erfindung bewegen und entsprechende Anteile, welche in den angegebenen Bereichen liegen, umfassen.

## Patentansprüche

1. Mischung zur Herstellung fettarmer und kohlenhydratarmer Backwaren,
**gekennzeichnet durch** einen Gehalt von
- 10 bis 60 Gew.-% zumindest einer Proteinquelle,
- 5 bis 60 Gew.-% an zumindest einem getreidefreien Mehl,
- 0,1 bis 10 Gew.-% an zumindest einem Verdickungsmittel,
- 0 bis 50 Gew.-% an zumindest einem Füllstoff und
- 0 bis 10 Gew.-% an zumindest einem Zusatzstoff bezogen auf des Gesamtgewicht der Mischung enthalten, wobei der Anteil an enthaltenen Fetten zwischen 1 bis 6,2 Gew.-% und der Anteil an enthaltenen, vom menschlichen Organismus verwertbaren Kohlenhydraten zwischen 3 bis 10 Gew.-% an der Mischung nicht übersteigt und wobei die Summe aller Zutaten jeweils 100 % beträgt.

2. Mischung nach Anspruch 1,
**dadurch gekennzeichnet,**
**dass** die Füllstoffe vorzugsweise Ballaststoffe, wie beispielsweise Faserstoffe, Cellulose und/oder Kleie von Getreiden und/oder Pseudogetreiden sind.

3. Mischung nach den Ansprüchen 1 und 2,
**dadurch gekennzeichnet,**
**dass** die Proteinquelle, das getreidefreie Mehl, das Verdickungsmittel und/oder die Füllstoffe die Zusatzstoffe enthalten.

4. Mischung nach einem der vorhergehenden Ansprüchen,
**dadurch gekennzeichnet,**
**dass** die Proteinquelle, das getreidefreie Mehl und/oder das Verdickungsmittel Kohlenhydrate als zumindest Einfachzucker enthalten.

5. Mischung nach einem der vorhergehenden Ansprüchen,
**dadurch gekennzeichnet,**
**dass** das getreidefreie Mehl entölt ist.

6. Mischung nach einem der vorhergehenden Ansprüchen, **dadurch gekennzeichnet,**
**dass** die Zusatzstoffe beispielsweise Würzmittel, Früchte und/oder Backtriebmittel sind.

7. Backfertige Mischung unter Verwendung einer Mischung nach den Ansprüchen 1 bis 6, wobei die Mischung mit einer Flüssigkeit vermischt ist,
**dadurch gekennzeichnet,**
**dass** die Mischung mit 1,2 bis 2 Teilen Flüssigkeit ausgehend vom Gewicht der Mischung vermischt ist und der Anteil an enthaltenen Fetten 1,6 Gew.-% und der Anteil an enthaltenen, vom menschlichen Organismus verwertbaren Kohlenhydraten 10 Gew.-% und bei Verwendung von Früchten als Zusatzstoff 15 Gew.-% an der backfertigen Gesamtmischung nicht übersteigt.

8. Verwendung der Mischung nach den Ansprüchen 1 bis 8 zur Herstellung von Backwaren wie Brote und Brötchen und zur Herstellung eines Ersatzes für feine Backwaren sowie für Dauerbackwaren.
